Europäisches Patentamt

European Patent Office

Office européen des brevets

(19)

(11) Publication number: **0 032 297**
**B1**

(12) EUROPEAN PATENT SPECIFICATION

(45) Date of publication of patent specification: **25.04.84**   (51) Int. Cl.³: **B 05 D 7/16, C 09 D 5/08**

(21) Application number: **80304468.4**

(22) Date of filing: **11.12.80**

(54) An autodepositing coating composition, a process for autodepositing an organic coating on a metal surface and a metal surface when so-coated.

(30) Priority: **12.12.79 US 102834**

(43) Date of publication of application:
**22.07.81 Bulletin 81/29**

(45) Publication of the grant of the patent:
**25.04.84 Bulletin 84/17**

(84) Designated Contracting States:
**BE DE FR GB IT**

(56) References cited:
**FR - A - 2 072 293**

**CENTRAL PATENTS INDEX, Basic Abstract Journal, C. AGDoc, Week B-06, 1979, abstract 10733B Derwent Publications Ltd. London, GB**

(73) Proprietor: **Amchem Products, Inc. a Corporation organised under the Laws of the State of Delaware United States of America**
**Brookside Avenue**
**Ambler Pennsylvania 19002 (US)**

(72) Inventor: **Broadbent, Ronald William**
**833 Hamel Avenue**
**Ardsley Pennsylvania 19038 (US)**

(74) Representative: **Green, Alan James et al,**
**Sanderson & Co. 97 High Street**
**Colchester Essex CO1 1TH (GB)**

An autodepositing coating composition, a process for autodepositing an organic
coating on a metal surface and a metal surface when so-coated

The present invention relates generally to an autodepositing coating composition, a process for autodepositing an organic coating on a metal surface and a metal surface when so-coated. More particularly, the invention relates to an improved autodepositing composition which is effective at neutral or near-neutral pH.

So-called "autodepositing coating" compositions, which first appeared in the patent literature in the early 1970's, are compositions that are effective in forming on a metallic surface immersed therein an organic coating which increases in thickness as a function of the length of time that the surface ("substrate") is immersed in the composition ("bath") in the absence of an externally-applied electrical potential.

By way of illustration, autodepositing coating compositions and methods of autodeposition are disclosed in U.S Patent Specification Nos. 3,585,084; 3,592,699; 3,776,848; 3,791,431; 3,795,546; 3,829,371; 3,839,097; 3,914,519; 3,936,546; 3,955,532; 3,960,610; 4,012,351; 4,030,945; 4,103,049; 4,104,424; and 4,108,817. The prior art autodepositing compositions are generally employed at a pH of between about 1.6 and about 3.8. Japanese Public Disclosure No. 147738/1978, however, discloses an aqueous autodepositing coating composition for metal that contains persulphate ion and which may be employed at a pH of from 4 to 8.5.

The present invention relates to an aqueous autodepositing coating composition which is effective in coating ferrous surfaces at a neutral or near-neutral pH, that is, a pH of from about 6 to about 8.

Accordingly, the present invention provides an autodepositing coating composition for use in forming an organic coating on a surface of a ferrous metal substrate, which composition comprises an aqueous composition, preferably having a pH of from about 6 to about 8, and containing about 5 to about 550 grams/litre of one or more water-soluble, water-solubilized, water-dispersed, or water-emulsified organic coating forming resins, about 1 to about 20 grams/litre of persulphate ion, and about 1 to about 10 grams/litre of fluoride.

The present invention also provides a process for autodepositing an organic coating on a surface of a ferrous metal substrate, which process comprises immersing the surface to be coated in a coating composition as defined above at a composition temperature of from about 20° to about 40°C for a time sufficient to autodeposit a coating of the desired coating thickness on said surface.

The invention also extends to a ferrous metal substrate having a surface coated by a process as defined above.

Although the theory behind the effectiveness of the present invention is not completely understood, it is thought that the persulphate ion, accelerated by the fluoride, acts to etch the substrate, thereby producing metal ions. The thus dissolved substrate metal ions act to destabilize the resin in the region of the substrate surface, thereby producing an autodeposited coating. The combination of persulphate ion and fluoride allows for the formation of greater coating thicknesses over shorter immersion times than had previously been experienced with compositions containing persulphate ion and enables the autodepositing coating compositions of the present invention to be employed effectively at neutral or near-neutral pH.

The compositions of the present invention contain one or more water-soluble, water-solubilized water-dispersed or water-emulsified organic coating forming resins. Such resins include the epoxy resins and polymeric film-forming materials such as polyethylene, polyacrylic and styrene-butadiene copolymers and polymers. By way of example, the epoxy resins (such as EPON resins, products of Shell Chemical Co.) can be emulsified with toluene to produce a water-emulsified epoxy resin. A particularly useful class of resins is the resin dispersion class known as "latices" which includes, for example, styrene-butadiene latex, such as that known as DAREX 637 manufactured by W. R. Grace & Co., butyl latex, and vinylidene chloride latex.

The amount of resin utilized can vary over a wide range. The lower concentration limit is dictated by the amount needed to provide sufficient material to form a coating. The upper limit is dictated by the amount of material that can be dispersed, dissolved or emulsified in the coating composition. Generally, the composition contains from about 5 to about 550, preferably from about 50 to about 200 grams/litre of resin.

The persulphate ion is preferably added as a salt thereof generally in an amount sufficient to provide from about 1 to about 20 grams/litre of persulphate ion in the coating composition. Preferably, the persulphate ion is added to the composition as ammonium persulphate in view of the fact that ammonium ion does not interfere with the coating process. In contrast, it has been found that other ions such as sodium and potassium ions can interfere with the autodeposition process for some latex resins, in which case an ion exchange step to remove potassium and/or sodium from the coating composition may be required.

The fluoride ion is preferably added as a salt thereof generally in an amount sufficient to provide from about 1 to about 10 grams/litre of fluoride in the coating composition. The fluoride is preferably added to the composition as ammonium fluoride.

The use of fluoride, which acts as an accelerator for the persulphate ion thereby increasing film build and the rate thereof, results in an autodeposited film or coating that is found to be more cohesive when wet, and more adhesive to the substrate than films formed from a persulphate coating composition that does not contain fluoride. This increased cohesiveness when wet increases the resistance of a newly autodeposited film to physical disruption when water rinsed.

The combination of fluoride and persulphate ion permits the use of lesser amounts of persulphate ion than are required in the absence of fluoride. Use of a lesser amount of persulphate ion appears to increase the corrosion resistance of the autodeposited film.

The coating compositions of the present invention are employed at a preferred pH of from about 6 to about 8, for example, a pH of from 6.8 to 7.4. While the compositions may be employed to form coatings at a pH as high as 8.5 or as low as about 4, there are many important advantages that are achieved by operation at neutral or near-neutral pH.

The rate of coating formation is higher and the cohesiveness of the film, and thus its ability to resist water rinsing, is higher when operating within the preferred pH range.

By operating within the pH range of about 6 to about 8, anticorrosive dyes and colours, as well as anticorrosive pigments such as those manufactured by Halox Pigments, a Division of Hammond Lead Products, Inc., may be used. Such anticorrosive dyes, colours and pigments are known to be acid sensitive. These acid sensitive dyes, colours, and pigments are anticorrosive and the use thereof results in autodeposited coatings that have improved corrosion resistance. In addition, lead chromate, which is an anticorrosive pigment and is also acid sensitive, may be effectively employed.

Additional advantages to be realized by operating at neutral or near-neutral pH include the obvious health and safety benefits and the ability to use less costly industrial equipment since special acid resistant tanks need not be employed. Yet another advantage is that certain resins such as the styrene-butadiene latices may be most effectively employed at neutral or near-neutral pH.

The present compositions may be formulated to have a pH within the range of about 6 to about 8 by adjusting the relative amounts of the essential ingredients. Therefore, it is not necessary to add any pH adjusting compounds such as hydrochloric acid or sulphuric acid to the present compositions, which acids are known to be detrimental to corrosion resistance. Such pH adjusting agents may of course, be added but their use is generally not preferred. If it is desired to add such agents, it is preferred to adjust the pH by the addition of hydrofluoric acid or ammonium hydroxide since the addition thereof will not introduce into the solution ions which are deleterious to the effectiveness thereof. It is generally preferred, however, that the compositions of the present invention should be free from all such added pH adjusting agents.

The substrate to be immersed in the present compositions in order to autodeposit a coating thereon may be any ferriferous or zinciferous substrate such as, for example, cold-rolled steel, mild steel, iron, galvanized steel, and the like.

Ferrous substrates are coated according to the autodeposition method of the present invention by immersing the substrate to be coated in a bath of the present composition, at a composition temperature of from about 20°C to about 40°C for a time sufficient to autodeposit a coating thereon of the desired thickness. As is well known in the autodeposition field, coating weight, for a particular coating composition and type of metal surface, tends to increase as the immersion time is increased. Generally, immersion times will vary from about 30 seconds or less to about 10 minutes or more.

Since the persulphate ion is known to decompose at a rate which increases with increasing temperature, the compositions should be employed within the above mentioned temperature range. It is preferred to employ the compositions of the present invention at a temperature of from about 20°C to about 30°C.

Other ingredients can be added in minor amounts to the present coating compositions, such as, for example, coalescing agents (e.g., ethylene glycol monobutyl ether of butyl carbitol acetate), pH adjusting agents such as those discussed above and various pigments (including the preferred, above-mentioned anticorrosive dyes, colours, and pigments) such as titanium dioxide or AQUABLAK 115, a carbon black dispersion which is a product of Borden Chemical Co. These ingredients may be present in amounts ranging from 1 gram/litre, or less, to 100 grams/litre, or more, depending upon the nature of the ingredient and the particular coating composition used.

The following examples present illustrative but non-limiting embodiments of the present invention. A comparative example is also presented.

## Example 1

Several autodepositing coating compositions were prepared by mixing DAREX 637 styrene-butadiene latex with deionized (D.I.) water and adding ammonium persulphate as follows.

The latex was diluted with water to the percent weight/volume solids specified in Table I below to make 1 litre of bath. To the 1 litre of bath were added 2 g/l of ammonium fluoride and ammonium persulphate in the amount specified in Table I to make autodepositing compositions having the pH values indicated in Table I.

Unpolished cold-rolled steel Q-panels, 7.6 × 10.2 cm (3″ × 4″), were immersed for periods of 1 minute, 3 minutes or 5 minutes in the above compositions. After immersion in the compositions, the coating thickness ("film build") was measured in mils. The results are given in Table I which follows:

3

TABLE I

| Resins, % Solids (weight/volume) | Ammonium Persulphate grams/litre | pH | Substrate Immersion Time, minutes | Coating Thickness, mm × 10⁻² | (mils) |
|---|---|---|---|---|---|
| 5 | 3 | 6.8 | 1 | 0.13—0.38 | (.05—.15) |
| 5 | 3 | 6.8 | 3 | 0.76—1.0 | (.3—.4) |
| 5 | 3 | 6.8 | 5 | 1.1—1.4 | (.45—.55) |
| 5 | 5 | 6.3 | 1 | 0.64—0.89 | (.25—.35) |
| 5 | 5 | 6.3 | 3 | 1.3—1.5 | (.50—.60) |
| 5 | 5 | 6.3 | 5 | 1.5—1.8 | (.60—.70) |
| 20 | 3 | 7.4 | 1 | 0.25—0.38 | (.10—.15) |
| 20 | 3 | 7.4 | 3 | 0.25—0.51 | (.10—.20) |
| 20 | 3 | 7.4 | 5 | 0.51—2.3 | (.20—.90) |
| 20 | 5 | 7.1 | 1 | 0.25 | (.10) |
| 20 | 5 | 7.1 | 3 | 1.8—2.8 | (.7—1.1) |
| 20 | 5 | 7.1 | 5 | 3.6—4.1 | (1.4—1.6) |

The results as presented in Table I show that the film thickness which can be achieved can vary considerably depending upon the substrate immersion time used, the percent resin solids used, and the quantity of ammonium persulphate used. It should be noted that a 5% weight/volume of resin solids using the DAREX 637 latex represents about 50 grams/litre of resin solids, whereas 20% weight/volume represents about 200 grams/litre of resin solids.

Example 2

Auotodepositing coating compositions were prepared as follows:

180 grams of DAREX 637, 2 grams of ammonium fluoride and 5 grams of AQUABLAK 115 (a carbon black pigment dispersion) were placed in a 1 litre beaker and the resulting mixture diluted with D.I. water to a volume of 1 litre.

Ammonium persulphate was added to 1 litre samples of the above composition in the amounts specified in Table II below to make autodepositing compositions having the pH values indicated in Table II.

Unpolished cold-rolled steel Q-panels 7.6 × 10.2 cm (3″ × 4″) were immersed for 60 seconds in these compositions in order to determine the etch rate of substrate metal in mg./sq. ft./min. In addition, Q-panels were immersed for 90 seconds in each composition in order to determine coating thickness. The results are presented in Table II which follows:

TABLE II

| | pH of Composition | Ammonium Persulphate Added, grams/litre | Etch Rate, mg./sq. cm./min. (mg./sq. ft./min.) | Coating Thickness, mm × 10⁻² (mils), for 90 sec. immersion |
|---|---|---|---|---|
| Run A | 7.4 | 3 | 0.0202 (18.8) | 1.3—1.5 (0.5—0.6) |
| Run B | 7.3 | 4 | 0.0198 (18.4) | 1.3—1.5 (0.5—0.6) |
| Run C | 7.1 | 5 | 0.0271 (25.2) | 1.8—2.0 (0.7—0.8) |
| Run D | 7.0 | 6 | 0.0280 (26.0) | 2.0—2.5 (0.8—1.0) |

4

The results as presented in Table II show that both substrate metal etch rate and autodeposited coating thickness increase in direct proportion to the quantity of persulphate in the coating composition.

Example 3 and Comparative Example 1

An autodepositing coating composition was prepared as follows:

180 grams of DAREX 637 and 5 grams of AQUABLAK 115 were placed in a 1 litre beaker and the resulting mixture diluted with D.I. water to a volume of 1 litre.

To each of two 1 litre samples of the above composition were added 2 grams/litre of ammonium persulphate. One sample was employed as a comparative composition, "C1". To the remaining sample were added 7.5 grams/litre of ammonium fluoride resulting in a solution representative of the present invention and identified as "E" in Table III. The resulting solutions have the pH values indicated in Table III.

Unpolished cold-rolled steel Q-panels, 7.6—10.2 cm (3″ × 4″), were immersed for 60 seconds in each composition in order to determine the etch rate of substrate metal in mg./sq. ft./min. In addition, Q-panels were immersed for 90 seconds in each composition in order to determine coating thickness. The results are presented in Table III which follows:

TABLE III

| | pH of Composition | Etch Rate, mg./sq. cm./min. (mg./sq. ft./min.) | Coating Thickness, mm × 10$^{-2}$ (mils) | |
| --- | --- | --- | --- | --- |
| | | | 60 sec. immersion | 90 sec. immersion |
| E | 7.2 | 0.0200 (18.6) | 1.3—1.5 (0.5—0.6) | 1.5—1.8 (0.6—0.7) |
| C1 | 7.7 | 0.00947 (8.8) | X | 0—1.3 (0—0.5) |

Thus, as is apparent from Table III, use of the compositions of the present invention results in greater coating thickness for the same immersion time and enables the obtention of greater coating thicknesses in shorter immersion times.

**Claims**

1. An autodepositing coating composition for use in forming an organic coating on a surface of a ferrous metal substrate, which composition comprises an aqueous composition having a pH of from about 4 to about 8.5 and containing about 5 to about 550 grams/litre of one or more water-soluble, water-solubilized, water-dispersed, or water-emulsified organic coating forming resins, and about 1 to about 20 grams/litre of persulphate ion, characterized in that said composition also contains from about 1 to about 10 grams/litre of fluoride.

2. A composition according to claim 1, characterized in that the pH of the aqueous composition is in the range of from about 6 to about 8.

3. A composition according to claim 1 or claim 2, characterized in that the source of persulphate ion is ammonium persulphate and/or the source of fluoride is ammonium fluoride.

4. A composition according to any one of the preceding claims, characterized in that the organic coating forming resin is in the form of a latex.

5. A composition according to claim 4, characterized in that the latex is selected from styrene-butadiene latex, butyl latex, and vinylidene chloride latex.

6. A composition according to claim 5, characterized in that the latex is a styrene-butadiene latex.

7. A composition according to any one of the preceding claims, characterized in that the concentration of resin is from about 50 to about 200 grams/litre.

8. A composition according to any one of the preceding claims, characterized in that the composition is free from added pH adjusting agents.

9. A composition according to any one of the preceding claims, characterized in that the composition is free from sodium and potassium ions.

10. A composition according to any one of the preceding claims, characterized by including one or more dyes, colours and/or pigments.

11. A composition according to any one of claims 2 to 9, characterized by including one or more dyes, colours and/or pigments which are anticorrosive.

12. A process for autodepositing an organic coating on a surface of a ferrous metal substrate, which process comprises immersing the surface to be coated in an aqueous autodepositing coating composition according to any one of the preceding claims at a composition temperature of from about 20°C to about 40°C for a time sufficient to autodeposit a coating of the desired coating thickness on said surface.

13. A process according to claim 12, wherein the composition temperature is from about 20°C to about 30°C.

14. A process according to claim 12 or 13, wherein the ferrous metal surface is immersed in the composition for from about 30 seconds to about 10 minutes.

15. A process according to any one of claims 12 to 14, wherein the substrate is a cold-rolled steel, mild steel, iron or galvanised steel substrate.

**Revendications**

1. Une composition de revêtement autodéposant destinée à former un revêtement organique sur une surface d'un substrat d'un métal ferreux, laquelle composition comprend une composition aqueuse ayant un pH d'environ 4 à environ 8, 5 et contenant d'environ 5 à environ 550 g/l d'une ou plusieurs résines formant un revêtement organique soluble dans l'eau ou solubilisé dans l'eau ou dispersé dans l'eau ou émulsifié dans l'eau et environ 1 à environ 20 g/l d'ions persulfate, caractérisée en ce que ladite composition contient d'environ 1 à environ 10 g/l de fluorure.

2. Une composition selon la revendication 1, caractérisée en ce que le pH de la composition aqueuse est dans le domaine d'environ 6 à environ 8.

3. Une composition selon les revendications 1 ou 2, caractérisée en ce que la source d'ions persulfate est du persulfate d'ammonium et/ou la source de fluorure est du fluorure d'ammonium.

4. Une composition selon l'une quelconque des revendications précédentes, caractérisée en ce que la résine formant le revêtement organique est sous la forme d'un latex.

5. Une composition selon la revendication 4, caractérisée en ce que le latex est choisi parmi le latex de butadiène-styrène, le latex de butyle et le latex de chlorure de vinylidène.

6. Une composition selon la revendication 5, caractérisée en ce que le latex est un latex de butadiène-styrène.

7. Une composition selon l'une quelconque des revendications précédentes, caractérisée en ce que la concentration de résine est d'environ 50 à environ 200 g/l.

8. Une composition selon l'une quelconque des revendications précédentes, caractérisée en ce que la composition est libre d'agent supplémentaire ajustant le pH.

9. Une composition selon l'une quelconque des revendications précédentes, caractérisée en ce que la composition est libre d'ions sodium et potassium.

10. Une composition selon l'une quelconque des revendications précédentes, caractérisée en ce qu'elle inclut un ou plusieurs teintures, couleurs et/ou pigments.

11. Une composition selon l'une quelconque des revendications 2 à 9, caractérisée en ce qu'elle inclut un ou plusieurs teintures, colorants et/ou pigments qui sont anticorrosifs.

12. Un procédé d'autodéposition d'un revêtement organique sur une surface d'un substrat d'un métal ferreux, lequel procédé comprend l'immersion de la surface à revêtir dans une composition aqueuse de revêtement autodéposant selon l'une quelconque des revendications précédentes, à une température de composition d'environ 20 à environ 40°C, pendant un temps suffisant pour autodéposer un revêtement de l'épasseur d'un revêtement désirée sur ladite surface.

13. Un procédé selon la revendication 12, caratérisé en ce que la température de la composition est d'environ 20 à environ 30°C.

14. Un procédé selon la revendication 12 ou 13, caractérisé en ce que la surface de métal ferreux est immergée dans la composition pendant environ 30 secondes à environ 10 minutes.

15. Un procédé selon l'une quelconque des revendications 12 à 14, caractérisé en ce que le substrat est un substrat d'acier laminé à froid, d'acier doux, de fer ou d'acier galvanisé.

**Patentansprüche**

1. Zusammensetzung für einen selbstabscheidenden Überzug zur Bildung eines organischen Überzuges auf einer Oberfläche eines Eisenmetallsubstrats, umfassend eine wässrige Zusammensetzung mit einem pH-Wert von etwa 4 bis etwa 8, 5 und enthaltend etwa 5 bis etwa 550 g/l eines oder mehrerer wasserlöslicher, wasser-solubilisierter, wasser-dispergierter oder wasser-emulgierter organischer überzugsbildender Harze und etwa 1 bis etwa 20 g/l Persulfationen, dadurch gekennzeichnet, daß diese Zusammensetzung auch etwa 1 bis etwa 10 g/l Fluorid enthält.

2. Zusammensetzung gemäß Anspruch 1, dadurch gekennzeichnet, daß der pH-Wert der wässrigen Zusammensetzung im Bereich von etwa 6 bis etwa 8 liegt.

3. Zusammensetzung gemäß Anspruch 1 oder 2, dadurch gekennzeichnet, daß die Quelle der Persulfationen Ammoniumpersulfat und/oder die Quelle des Fluorids Ammoniumfluorid ist.

4. Zusammensetzung gemäß einem der vorgehenden Ansprüche, dadurch gekennzeichnet, daß das organische überzugsbildende Harz in der Form eins Latex vorliegt.

5. Zusammensetzung gemäß Anspruch 4, dadurch gekennzeichnet, daß der Latex ausgewählt ist unter Styrol-Butadien-Latex, Butyl-Latex und Vinylidenchlorid-Latex.

6. Zusammensetzung gemäß Anspruch 5, dadurch gekennzeichnet, daß der Latex ein Styrol-Butadien-Latex ist.

7. Zusammensetzung gemäß einem der vorgehenden Ansprüche, dadurch gekennzeichnet, daß die Konzentration des Harzes etwa 50 bis etwa 200 g/l beträgt.

8. Zusammensetzung gemäß einem der vorgehenden Ansprüche, dadurch gekennzeichnet, daß die Zusammensetzung frei ist von zugesetzten pH-Einstellungsmitteln.

9. Zusammensetzung gemäß einem der vorgehenden Ansprüche, dadurch gekennzeichnet, daß die Zusammensetzung frei ist von Natrium- und Kaliumionen.

10. Zusammensetzung gemäß einem der vorgehenden Ansprüche, gekennzeichnet durch den Einschluß einer oder mehrerer Farben, Farbstoffe und/oder Pigmente.

11. Zusammensetzung gemäß einem der Ansprüche 2 bis 9, gekennzeichnet durch den Einschluß einer oder mehrerer Farben, Farbstoffe und/oder Pigmente, die antikorrosiv sind.

12. Verfahren zur Selbstabscheidung eines organischen Überzugs auf einer Oberfläche eines Eisenmetallsubstrates, wobei die zu überziehende Oberfläche in eine wässrige Selbstabscheidungs-Überzugszusammensetzung gemäß einem der vorgehenden Ansprüche bei einer Temperatur der Zusammensetzung von etwa 20°C bis etwa 40°C während einer ausreichenden Zeit zur Selbstabscheidung eines Überzugs der gewünschten Überzugsdicke auf der Oberfläche eingetaucht wird.

13. Verfahren gemäß Anspruch 12, wobei die Temperatur der Zusammensetzung etwa 20°C bis etwa 30°C beträgt.

14. Verfahren gemäß Anspruch 12 oder 13, wobei die Eisenmetalloberfläche in die Zusammensetzung während etwa 30 sec. bis etwa 10 min. eingetaucht wird.

15. Verfahren gemäß einem der Ansprüche 12 bis 14, wobei das Substrat ein kaltgewalzter Stahl, Schmiedeeisen, Eisen oder galvanisierter Stahl ist.